# FASCICULE DE BREVET EUROPEEN

(11) **EP 4 174 330 B1**
(45) Date de publication et mention de la délivrance du brevet: **22.01.2025**
(21) Numéro de dépôt: 22195289.8
(22) Date de dépôt: 13.09.2022
(51) Int. Cl.: F16B 19/05, F16B 5/02, F16B 11/00, F16B 5/04, F16B 37/06, B21J 15/02

(54) **PROCÉDÉ ET FIXATION POUR ASSEMBLER AU MOINS DEUX PIÈCES ÉLÉMENTAIRES**
VERFAHREN UND BEFESTIGUNG ZUM ZUSAMMENBAU MINDESTENS ZWEIER ELEMENTARER BAUTEILE
METHOD AND ATTACHMENT FOR ASSEMBLING AT LEAST TWO BASIC PARTS

(30) Priorité: 26.10.2021 FR 2111342
(43) Date de publication de la demande: 03.05.2023
(73) Titulaire: Airbus Helicopters, 13725 Marignane Cedex (FR)
(72) Inventeur: ACHARD, Victor, 13090 AIX EN PROVENCE (FR)
(74) Mandataire: GPI Brevets

(56) Documents cités:
- WO-A1-2019/155245
- US-A- 3 915 052
- US-A- 4 146 953

## Description

La présente invention concerne un procédé et une fixation pour assembler au moins deux pièces élémentaires.

Une structure peut comprendre un assemblage de pièces élémentaires. Ces pièces élémentaires peuvent être métalliques ou en matériaux composites. Au sein de la structure, des pièces élémentaires peuvent être maintenues assemblées l'une contre l'autre à l'aide d'une ou de plusieurs fixations mécaniques, voire aussi à l'aide d'une matière adhésive

Une telle fixation peut comprendre un élément allongé qui traverse un ensemble de trous respectivement des pièces élémentaires à assembler pour les serrer. La fixation peut ainsi comprendre une vis coopérant avec un écrou, un rivet ou encore un boulon serti connu sous l'expression anglaise « swaged fastening system ».

Un boulon serti comporte un composant muni d'un élément allongé, d'une tête et d'une tige. L'élément allongé comprend un tronçon initial partant de la tête, prolongé par un tronçon fusible puis par un tronçon de traction. La tête est alors agencée contre une première pièce élémentaire à assembler, le tronçon initial traversant des trous respectifs des pièces élémentaires. Une bague est ensuite disposée autour de la partie du tronçon initial qui s'étend en dehors des trous des pièces élémentaires, du côté opposé à la tête par rapport aux pièces élémentaires. Un outil est alors positionné pour tirer sur le tronçon de traction. Simultanément, une enclume de l'outil pousse puis déforme et sertit la virole dans des rainures de verrouillage du tronçon initial pour lier la virole au tronçon initial. Le diamètre de la virole est réduit et sa hauteur augmente. Le tronçon initial s'allonge jusqu'à la rupture du tronçon fusible.

Quelle que soit la nature de la fixation, les trous des pièces élémentaires à assembler avec une même fixation doivent de fait être correctement alignés. En outre, assembler des pièces élémentaires dans un environnement complexe peut être délicat. En particulier, cet environnement peut rendre difficile l'agencement d'outils nécessaires à cette opération. C'est notamment le cas pour assembler précisément entre elles des parties d'une cellule d'aéronef.

De plus, les trous doivent éviter de contenir des polluants susceptibles d'engendrer des contraintes pouvant avoir un impact sur la durée de vie de l'assemblage.

Un premier procédé d'assemblage connu est parfois dénommé « match drilling » en langue anglaise. Ce procédé comporte une étape de positionnement des pièces élémentaires à assembler les unes contre les autres. Les pièces élémentaires sont maintenues avec un outillage de serrage, par exemple dans un atelier.

Pour chaque fixation à prévoir, des trous temporaires sont alors percés conjointement dans les pièces élémentaires lors d'une étape de mise en correspondance, à savoir sont percés lors de la même opération. Un foret est déplacé selon un axe pour percer les pièces élémentaires de la même manière l'une après l'autre lors d'une même translation.

Les pièces élémentaires sont ensuite désassemblées et nettoyées. Le nettoyage vise à notamment enlever d'éventuels copeaux et bavures résultant du perçage dans les trous.

Dès lors, les pièces élémentaires pré-percées et nettoyées sont ensuite à nouveau positionnées de la manière adéquate au sein de la structure concernée, et éventuellement collées les unes aux autres. Pour reprendre l'exemple d'un aéronef, les pièces élémentaires peuvent être positionnées sur l'aéronef. Les trous temporaires permettent de correctement positionner les pièces élémentaires sur l'aéronef. Si un collage est réalisé, un nettoyage peut être réalisé à l'issue de cette étape afin de retirer des éventuels excès de colle, notamment dans les trous.

Ensuite, les pièces élémentaires sont à nouveau percées conjointement en agrandissant les trous temporaires pour obtenir des trous finaux. Une fixation est alors introduite dans les trous finaux.

Ce premier procédé d'assemblage est intéressant en permettant de positionner précisément les pièces élémentaires et en évitant la présence de copeaux voire de matière adhésive dans les trous. Toutefois, le premier procédé d'assemblage s'avère de fait relativement long en nécessitant de multiples étapes de positionnement, de perçage et de nettoyage.

Un deuxième procédé d'assemblage connu comporte une étape de positionnement des pièces élémentaires à assembler, et éventuellement de collage, au sein de la structure même devant être équipée de ces pièces élémentaires.

Pour chaque fixation à prévoir, des trous définitifs sont alors percés conjointement dans les pièces élémentaires, à savoir sont percés lors de la même opération. Un foret est déplacé pour percer conjointement les pièces élémentaires de la même manière puis une fixation est introduite dans les trous ainsi obtenus. Les pièces élémentaires doivent être préalablement fortement serrées les unes contre les autres, aves des outillages de serrage, pour notamment éviter de générer des résidus au niveau des interfaces entre les pièces élémentaires. Un serrage élevé permet en effet d'éviter une séparation des pièces élémentaires lors du perçage.

Ce deuxième procédé d'assemblage est intéressant en comprenant une unique étape de perçage. Cependant ce deuxième procédé d'assemblage, peut être difficile à mettre en oeuvre en fonction de l'emplacement des pièces élémentaires à assembler, notamment dans un environnement rendant difficile l'agencement des outillages de serrage.

Un troisième procédé d'assemblage est parfois connu sous l'expression anglaise « hole-to-hole », notamment dans le domaine aéronautique. Ce troisième procédé d'assemblage consiste à percer chaque pièce élémentaire séparément de manière précise, par exemple en atelier. Les pièces élémentaires sont alors nettoyées, puis positionnées avec soin les unes par rapport aux autres au sein de la structure à équiper lors d'une étape d'assemblage afin de pouvoir agencer la ou les fixations.

Le troisième procédé d'assemblage peut s'avérer relativement simple. Cependant, il peut être délicat à mettre en oeuvre pour des pièces ayant des formes complexes et/ou pour lesquelles les fixations assurent l'assemblage et le positionnement de ces pièces, par exemple au sein de cellules d'aéronefs. En effet, ce troisième procédé requiert une excellente maitrise des chaînes de cotes.

Un quatrième procédé d'assemblage consiste à utiliser une fixation auto-perçante. Chaque fixation est utilisée comme outil de poinçonnage pour réaliser les trous dans les pièces élémentaires à assembler. De nouvelles fixations sont de fait à certifier. De plus, ce procédé nécessite un outillage lourd, tel qu'un système de presse. En outre, l'outillage peut imposer une distance minimale entre la fixation et un bord d'une pièce élémentaire.

La revue « Materials and design » de décembre 2013 présente un article dénommé « the effect of material properties and joining process parameters on behalf of self-pierce riveting joints made with the solid rivet » qui évoque ce quatrième procédé d'assemblage. Une fixation de l'état de l'art est connue par US 3 915 052 A.

La présente invention a alors pour objet de proposer une fixation innovante pour assembler précisément au moins deux pièces élémentaires.

Une telle fixation selon la revendication 1 est configurée pour assembler au moins deux pièces élémentaires en les serrant, ladite fixation comportant un premier composant, le premier composant étant muni d'une tête prolongée par un élément allongé, ledit élément allongé comprenant le long d'un axe géométrique un tronçon initial et un tronçon final, le tronçon initial s'étendant selon ledit axe géométrique à partir de la tête, le tronçon final formant une extrémité libre de l'élément allongé

Le tronçon initial est contenu dans un premier cylindre géométrique qui est centré sur ledit axe géométrique et d'un premier diamètre géométrique, le tronçon final étant contenu dans un deuxième cylindre géométrique qui est centré sur ledit axe géométrique et d'un deuxième diamètre géométrique, le premier diamètre géométrique étant supérieur au deuxième diamètre géométrique, l'élément allongé comportant un organe coupant positionné entre l'extrémité libre et la tête selon ledit axe géométrique, à savoir positionnée entre un premier plan orthogonal à l'axe géométrique et passant par l'extrémité libre et un deuxième plan orthogonal à l'axe géométrique passant par la tête selon ledit axe géométrique. Le tronçon initial et le tronçon final peuvent chacun avoir une forme symétrisée au regard dudit axe géométrique. Le tronçon initial et le tronçon final peuvent être coaxiaux.

L'organe coupant peut faire face au deuxième plan passant par l'extrémité libre de l'élément allongé. L'organe coupant n'est pas un filet de vissage.

L'organe coupant peut être contenu dans le premier cylindre géométrique.

L'organe coupant peut comprendre une arête coupante.

L'organe coupant peut être configuré pour avoir un pouvoir de découpe suite à une translation selon ledit axe géométrique et un sens de découpe.

L'organe coupant peut comprendre une arête coupante. Par exemple, l'organe coupant comprend un possible support muni selon un axe orthogonal à l'axe géométrique d'une face interne puis d'une face externe, l'arête coupante pouvant être située à l'interface entre la face interne et la face externe.

L'expression « cylindre géométrique » désigne la plus petite forme géométrique cylindrique à base circulaire contenant le tronçon associé. Ainsi, le tronçon initial est contenu dans un premier cylindre géométrique ayant un diamètre plus grand qu'un deuxième cylindre géométrique contenant le tronçon final. Le terme diamètre est à considérer selon un axe orthogonal à l'axe géométrique, les cylindres géométriques étant centrés sur cet axe géométrique.

Par suite, l'élément allongé a une forme d'une tige épaulée en raison du tronçon final qui présente un diamètre réduit par rapport au tronçon initial.

Le premier diamètre géométrique est configuré pour que le tronçon initial soit insérable, par une simple translation selon le sens de découpe, dans un premier trou d'au moins une première pièce élémentaire, le premier diamètre géométrique étant par exemple égal à un premier diamètre d'insertion du premier trou à un jeu de montage près ou étant configuré pour que l'élément allongé soit inséré avec une interférence légère dans le premier trou..

De même, le deuxième diamètre géométrique est configuré pour que le tronçon final soit insérable, par une simple translation selon le sens de découpe, dans un deuxième trou d'au moins une deuxième pièce élémentaire, le deuxième trou étant dans le prolongement du premier trou. Le deuxième diamètre géométrique est égal à un deuxième diamètre d'insertion du deuxième trou à un jeu de montage près. Par contre, le tronçon initial ne peut de fait pas pénétrer dans le deuxième trou. En effet, le deuxième diamètre d'insertion du deuxième trou est strictement inférieur au premier diamètre géométrique.

Dès lors, l'élément allongé est muni d'un organe coupant pour agrandir au moins le deuxième trou en étant déplacé selon le sens de découpe. L'organe coupant peut être porté, directement ou via un support, par le tronçon initial, voire le tronçon final ou encore un tronçon fusible décrit par la suite.

Une telle fixation permet de trouer séparément et dans un atelier les pièces élémentaires à assembler. Comme l'explique le procédé décrit par la suite, l'élément allongé est alors inséré selon le sens de découpe dans les pièces à assembler pour les positionner correctement. Un opérateur tire ensuite selon le sens de découpe sur l'élément allongé pour agrandir par poinçonnage le ou les deuxièmes trous et y faire passer le tronçon initial. Le tronçon initial peut former alors un poinçon coopérant avec une matrice formée par un deuxième composant décrit par la suite.

Cette nouvelle fixation permet d'appliquer une nouvelle procédure d'assemblage bénéficiant des avantages du procédé « hole-to-hole » et de la facilité offerte par un système auto-perforant. Sur une structure comprenant de nombreuses fixations, un gain économique de fabrication est envisageable. Les risques de polluer des trous par des résidus, par exemple de perçage, peuvent aussi être limités.

Ce procédé ne nécessite en outre pas de mettre en oeuvre de multiples perçages conjoints mais de réaliser des pré-trous éventuellement indépendamment les uns des autres, ni d'éventuels outillages de serrage encombrants et lourds. L'outillage requis pour exercer un effort de traction sur le tronçon final peut avoir des dimensions et/ou une masse restreintes et peut permettre d'agencer une fixation à proximité de bords ou loin de bords des pièces élémentaires.

La fixation peut comprendre une ou plusieurs des caractéristiques qui suivent, prises seules ou en combinaison.

Le tronçon initial peut s'étendre selon ledit axe géométrique de ladite tête jusqu'à une extrémité initiale portant ledit organe coupant.

L'organe coupant peut ainsi être en contact avec une partie non trouée d'une pièce élémentaire suite à l'insertion de l'élément allongé dans des trous respectifs d'au moins deux pièces élémentaires. L'organe coupant peut alors élargir le trou concerné suite à un déplacement au moins en translation selon le sens de découpe de l'élément allongé tel un poinçon.

Selon une possibilité compatible avec les précédentes, l'organe coupant pouvant avoir une arête coupante, l'arête coupante peut avoir une forme circulaire, éventuellement centrée sur l'axe géométrique et présentant ledit premier diamètre géométrique.

Lorsque le tronçon initial se trouve dans un premier trou d'une première pièce élémentaire et que l'arête coupante bute contre une d'une deuxième pièce élémentaire, l'arête coupante peut alors couper la deuxième pièce élémentaire, indépendamment du décalage entre le premier trou et le deuxième trou, afin d'agrandir le deuxième trou.

Selon une variante, ledit élément allongé peut comprendre un tronçon fusible interposé entre le tronçon initial et le tronçon final.

Le tronçon fusible peut présenter un anneau centré sur ledit axe géométrique et ayant un diamètre inférieur au deuxième diamètre géométrique.

Eventuellement, l'arête coupante entoure, localement, le tronçon fusible.

Dès lors, l'arête coupante entoure à 360 degrés, autour dudit axe géométrique, une section du tronçon fusible.

Selon une deuxième variante, le tronçon final prolonge le tronçon initial.

Un tronçon fusible peut être inutile en raison de la différence entre le premier diamètre géométrique et le deuxième diamètre géométrique.

Eventuellement, ladite arête coupante peut entourer, localement, le tronçon final.

Dès lors, l'arête entoure à 360 degrés, autour dudit axe géométrique, une section du tronçon final.

Selon une possibilité compatible avec les précédentes et indépendamment des variantes, ledit tronçon initial peut comporter au moins une rainure agencée entre la tête et l'organe coupant, voire entre la tête et l'arête coupante le cas échéant.

Le tronçon initial peut comprendre une succession de rainures annulaires parallèles les unes aux autres voire orthogonales audit axe géométrique dans un but de sertissage, ou au moins une rainure en hélice formant un filet de vissage.

Selon une possibilité compatible avec les précédentes et indépendamment de la variante, ladite fixation peut comporter un deuxième composant indépendant de l'élément allongé, le deuxième composant étant muni d'une virole configurée pour être sertie au tronçon initial ou d'un écrou configuré pour être vissé au tronçon initial.

La présente divulgation vise aussi un procédé d'assemblage selon a revendication 10 d'au moins deux pièces élémentaires avec une fixation selon l'invention. Le procédé comporte pour ladite fixation :
- réalisation d'au moins un premier trou présentant un premier diamètre d'insertion respectivement dans une ou plusieurs premières pièces des pièces élémentaires, à savoir dans chaque première pièce de la ou des premières pièces à assembler, et
- réalisation d'au moins un deuxième trou présentant un deuxième diamètre d'insertion respectivement dans une ou plusieurs deuxièmes pièces des pièces élémentaires, le deuxième diamètre d'insertion étant inférieur au premier diamètre d'insertion, à savoir dans chaque deuxième pièce de la ou des deuxièmes pièces à assembler, et
- introduction de l'élément allongé dans le ou les premiers et deuxièmes trous en emmenant en butée ledit organe coupant, voire le cas échéant ladite arête coupante, contre une deuxième pièce, et
- découpe avec ledit organe coupant, voire le cas échéant ladite arête coupante de ladite une ou plusieurs deuxièmes pièces par une première traction en exerçant une première force de traction sur ledit tronçon final, et
- agencement d'une virole sur une partie du tronçon initial située en dehors desdits pièces élémentaires, deuxième traction en exerçant une deuxième force de traction sur le tronçon final et déformation de la virole jusqu'à une séparation du tronçon final de ladite fixation, ladite deuxième force de traction étant supérieure à la première force de traction, ou
- agencement, par vissage, d'un écrou sur une partie du tronçon initial située en dehors desdits pièces élémentaires, deuxième traction en exerçant une deuxième force de traction sur le tronçon final et jusqu'à une séparation du tronçon final de ladite fixation, ladite deuxième force de traction étant supérieure à la première force de traction.

Le procédé permet d'assembler au moins deux pièces élémentaires formant alors respectivement une première pièce et une deuxième pièce.

Le procédé permet d'assembler aussi entre elles trois ou plus pièces élémentaires. Dans ce cas, au moins une pièce élémentaire est une première pièce et au moins une pièce élémentaire est une deuxième pièce, les autres pièces élémentaires pouvant être chacune une première ou une deuxième pièce.

Dès lors, pour chaque fixation, la ou les premières pièces sont trouées, par exemple dans un atelier, pour présenter un trou ayant un premier diamètre d'insertion. Pour chaque fixation, la ou les deuxièmes pièces sont trouées, par exemple dans un atelier, selon un deuxième diamètre d'insertion plus petit que le premier diamètre d'insertion.

Pour chaque fixation, ces trous permettent ensuite de positionner les diverses pièces de manière adéquate, par exemple sur une structure en construction, en alignant leurs trous respectifs à l'aide de la fixation.

Chaque premier composant est alors inséré dans le ou les premiers trous et le ou les deuxièmes trous correspondants. Le premier composant permet d'ajuster le positionnement des pièces élémentaires entre elles. Plus précisément, le tronçon initial est inséré selon le sens de découpe dans le ou les premières pièces jusqu'à ce que l'organe coupant, voire son arête coupante éventuelle, soit en butée contre une deuxième pièce. Le tronçon final s'étend alors dans la ou les deuxièmes pièces et en dehors des pièces élémentaires.

Le premier diamètre géométrique est éventuellement égal au premier diamètre d'insertion à un jeu de montage prés ou l'élément allongé peut être inséré en déformant élastiquement la ou les premières pièces. Le deuxième diamètre géométrique est égal au deuxième diamètre d'insertion à un jeu de montage prés. Ces caractéristiques permettent de bien positionner les pièces élémentaires les unes par rapport aux autres.

Une première force de traction selon l'axe géométrique est alors exercée sur le tronçon final avec un outillage. L'organe coupant élargit alors le ou les deuxièmes trous. Le premier effort de traction est dimensionné pour ne pas sectionner le tronçon final à ce stade. Le tronçon initial s'étend alors aussi dans la ou les deuxièmes pièces élémentaires et rejoint le milieu extérieur. De fait, l'organe coupant éjecte de l'assemblage la matière découpée, en particulier des copeaux.

Une virole ou un écrou est ensuite agencé contre le tronçon initial pour serrer les pièces, puis le tronçon final est détaché par application d'un deuxième effort de traction selon l'axe géométrique sur ce tronçon final.

Le procédé peut comporter une ou plusieurs des caractéristiques qui suivent, prises seules ou en combinaison.

Le procédé peut comporter un positionnement desdites pièces élémentaires l'une par rapport à au moins une autre avant ladite introduction.

Cette étape peut être mise en oeuvre au sein d'une structure en construction.

Le procédé peut comporter un collage avec un adhésif desdites pièces élémentaires l'une à l'autre lors dudit positionnement.

Un mastic peut être déposé entre les pièces élémentaires. Une étape de nettoyage peut faire suite au collage.

Selon un autre aspect, lesdits perçages peuvent être réalisés séparément.

L'invention et ses avantages apparaîtront avec plus de détails dans le cadre de la description qui suit avec des exemples donnés à titre illustratif en référence aux figures annexées qui représentent :
la figure 1, une vue en coupe d'une fixation selon l'invention munie d'une virole,
la figure 2, une vue en coupe d'une fixation selon l'invention munie d'une virole et d'une zone fusible,
la figure 3, une vue en coupe d'une fixation selon l'invention munie d'un écrou,
la figure 4, une vue en coupe d'une fixation selon l'invention munie d'un écrou et d'une zone fusible,
la figure 5, une vue en coupe illustrant le perçage d'une première pièce élémentaire,
la figure 6, une vue en coupe illustrant le perçage d'une deuxième pièce élémentaire,
la figure 7, une vue en coupe illustrant le positionnement des pièces élémentaires,
la figure 8, une vue de dessus illustrant le positionnement des pièces élémentaires,
la figure 9, une vue en coupe illustrant l'agencement d'une fixation,
la figure 10, une vue en coupe illustrant le fonctionnement de la fixation, et
la figure 11, une vue en coupe de l'assemblage final obtenu suite à la figure 10.

Les éléments présents dans plusieurs figures distinctes sont affectés d'une seule et même référence.

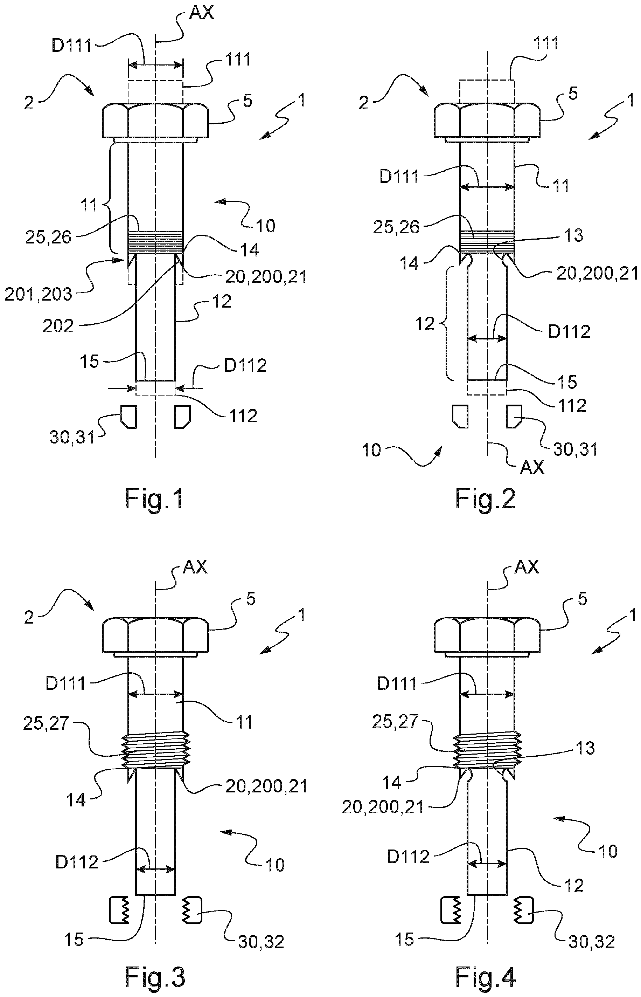

Les figures 1 à 4 illustrent des exemples de fixations 1 selon l'invention. Une telle fixation 1 est notamment configurée pour assembler au moins deux pièces élémentaires 51, 52 entre elles en les serrant l'une contre au moins une autre.

Quelle que soit la réalisation, une fixation 1 selon l'invention comporte un premier composant 2. Le premier composant 2 possède une tête 5. Par exemple, la tête 5 peut avoir une forme hexagonale, carré, fraisé, cylindrique, fendue ou autres.

Le premier composant 2 comporte de plus un élément allongé 10 attaché à la tête 5. Cet élément allongé 10 prolonge la tête 5 selon un axe géométrique AX. L'axe géométrique AX peut être un axe de symétrie de la tête 5. Dès lors, la tête 5 peut être en saillie de l'élément allongé 10, radialement au regard de l'axe géométrique AX.

Cet élément allongé 10 comprend divers tronçons successifs, selon l'axe géométrique AX. En particulier, l'élément allongé 10 comporte au moins un tronçon initial 11 et un tronçon final 12 configuré pour pouvoir être séparé du tronçon initial.

Le tronçon initial 11 s'étend selon l'axe géométrique AX à partir de la tête 5 jusqu'à une extrémité initiale 14 suivie directement ou indirectement du tronçon final 12. A l'inverse, le tronçon final 12 présente une extrémité libre 15 de l'élément allongé 10.

Le tronçon initial 11 et le tronçon final 12 peuvent être coaxiaux, l'axe géométrique AX pouvant être un axe de symétrie de ces tronçons initial 11 et final 12.

Le tronçon initial 11 peut être contenu dans un premier cylindre géométrique 111 centré sur l'axe géométrique AX, à savoir non pas un cylindre en tant que tel mais un cylindre imaginaire. Le premier cylindre géométrique 111 présente un premier diamètre géométrique D111. Par exemple, le tronçon initial 11 comprend une première face en contact avec ce premier cylindre géométrique, à l'exception de zones éventuelles rainurées de cette première face.

Le tronçon final 12 peut être contenu dans un deuxième cylindre géométrique 112 centré sur l'axe géométrique AX, à savoir non pas un cylindre en tant que tel mais un cylindre imaginaire, voir peut être un cylindre. Le deuxième cylindre géométrique 112 présente un deuxième diamètre géométrique D112. Par exemple, le tronçon final 12 comprend une deuxième face en contact avec ce deuxième cylindre géométrique, à l'exception de zones éventuelles creusées de cette deuxième face.

En outre, le premier diamètre géométrique D111 est supérieur au deuxième diamètre géométrique D112. Dès lors, le tronçon initial 11, et en particulier son extrémité initiale 14, forment un épaulement au regard du tronçon final 12.

Indépendamment de ces aspects, le tronçon final 12 peut prolonger directement le tronçon initial 11, cette possibilité étant illustrée sur les figures 1 et 3.

Alternativement, un tronçon fusible 13 peut être interfacé entre le tronçon initial 11 et le tronçon final 12, cette possibilité étant illustrée sur les figures 2 et 4. Dans ce cas, le tronçon fusible 13 est en contact avec le tronçon initial 11 et le tronçon final 12, le tronçon initial 11 ne touchant pas le tronçon final 12. Le tronçon fusible peut présenter un diamètre fusible inférieur au deuxième diamètre géométrique D112.

Indépendamment des aspects précédents et quelle que soit la réalisation, l'élément allongé 10 comporte un organe coupant 200.

Par exemple, le tronçon initial 11 porte un organe coupant 200 en amont de l'extrémité libre selon un sens allant de la tête vers l'extrémité libre.

Eventuellement, l'organe coupant 200 comporte une arête coupante 20. l'organe coupant 200 voire l'arête coupante 20 peuvent être contenus dans le premier cylindre géométrique 111 centré sur l'axe géométrique AX.

Selon un exemple, l'arête coupante 20 est attachée à l'extrémité initiale 14. Eventuellement, l'extrémité initiale 14 est usinée pour former l'arête coupante 20.

Alternativement, l'arête coupante 20 peut être attachée au tronçon final 11 voire au tronçon fusible 13.

Selon un exemple, l'arête coupante 20 est disposée sur un support 201 de l'organe coupant 200. Ce support 201, par exemple annulaire, peut être porté par l'extrémité initiale 14 voire par le tronçon fusible 13 ou le tronçon final 12. Le support 201 s'étend longitudinalement selon l'axe géométrique AX et un sens l'éloignant de la tête 5, par exemple à partir du tronçon initial 11 et de son extrémité initiale 14. Le support 201 peut comprendre radialement, par rapport à l'axe géométrique, une face interne 202 puis une face externe 203 en s'éloignant de l'axe géométrique, l'arête coupante étant située à l'intersection entre la face interne et la face externe.

De plus, l'arête coupante 20 peut avoir une forme circulaire 21. Cette forme circulaire 21 peut être contenue dans le premier cylindre 111, voire dans un plan orthogonal à l'axe géométrique AX. La forme circulaire 21 peut être centrée sur l'axe géométrique AX voire peut présenter ledit premier diamètre géométrique D111.

Lorsque l'élément allongé 10 ne comporte pas un tronçon fusible 13, la forme circulaire 21 voire tout l'organe coupant 200 peut entourer partiellement le tronçon final 12, cette possibilité étant illustrée sur les figures 1 et 3. Le support éventuel peut entourer partiellement le tronçon final 12.

Lorsque l'élément allongé 10 comporte un tronçon fusible 13, la forme circulaire 21 peut entourer le tronçon fusible 13, cette possibilité étant illustrée sur les figures 2 et 4. Le support éventuel peut entourer partiellement ou totalement le tronçon fusible 13 voire partiellement le tronçon final 12

Indépendamment de ces aspects, le tronçon initial 11 peut comporter au moins une rainure 25 agencée entre la tête et l'organe coupant 200. Une telle rainure 25 peut prendre la forme d'une gorge circulaire 26 selon les figures 1 et 2 ou d'une gorge 27 formant un filet de vissage selon les figures 3 et 4.

Indépendamment de ces aspects, la fixation 1 peut comporter un deuxième composant 30, indépendant dudit premier composant 2, apte à coopérer avec le tronçon initial 11. Ce deuxième composant 30 peut comprendre une virole 31 configurée pour être sertie au tronçon initial 11 selon les figures 1 et 2 ou un écrou 32 configuré pour être vissé au tronçon initial 11 selon les figures 3 et 4.

Par suite, la figure 1 illustre une réalisation dépourvue de tronçon fusible 13. La fixation 1 est munie d'un tronçon initial 11 comprenant plusieurs rainures 26 sur lesquelles peut être sertie une virole 31, et d'un organe coupant 200 ayant une arête coupante 20 entourant le tronçon final 12.

La figure 2 illustre une réalisation munie d'un tronçon fusible 13.

La fixation 1 est munie d'un tronçon initial 11 comprenant plusieurs rainures 26 sur lesquelles peut être sertie une virole 31, et d'un organe coupant 200 ayant une arête coupante 20 entourant le tronçon fusible 13.

La figure 3 illustre une réalisation dépourvue de tronçon fusible 13, et munie d'un tronçon initial 11 comprenant une gorge 27 formant un filet de vissage auquel peut être vissé un écrou 32, et d'un organe coupant 200 ayant une arête coupante 20 entourant le tronçon final 12.

La figure 4 illustre une réalisation munie d'un tronçon fusible 13 et d'un tronçon initial 11 comprenant une gorge 27 formant un filet de vissage auquel peut être vissé un écrou 32, et d'un organe coupant 200 ayant une arête coupante 20 entourant le tronçon fusible 13.

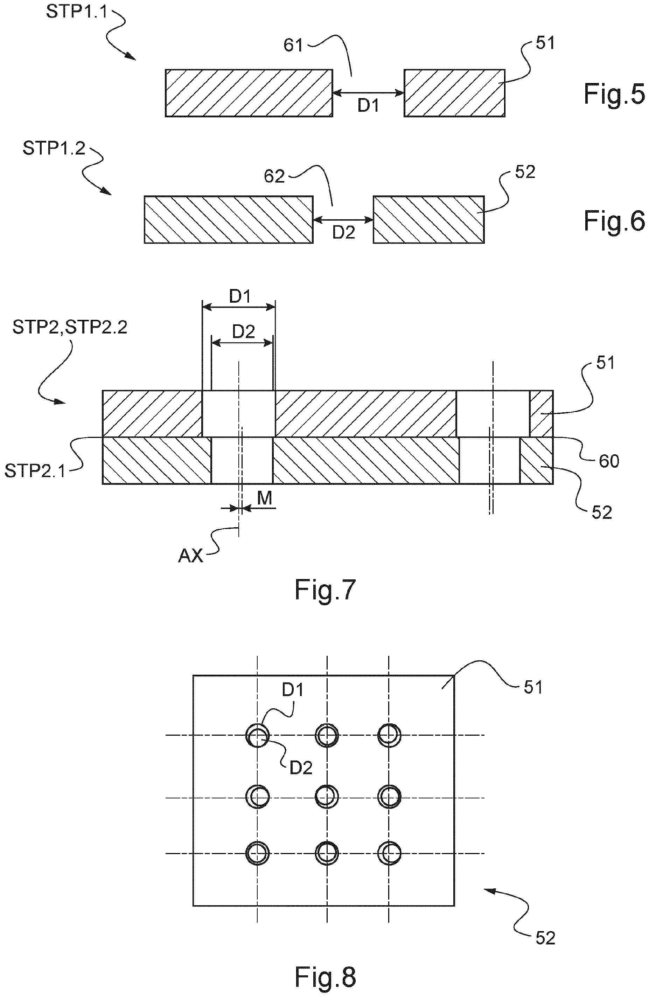

Les figures 5 à 11 illustrent un procédé d'assemblage pour assembler au moins deux pièces élémentaires 51, 52 avec une telle fixation 1. La fixation 1 illustrée correspond à la réalisation de la figure 1 mais le procédé est applicable aux autres réalisations.

Les illustrations font références à deux pièces élémentaires 51,52, mais un plus grand nombre de pièces élémentaires est envisageable. Les pièces élémentaires 51,52 peuvent être métalliques ou en matériaux composites par exemple.

Selon la figure 5, pour chaque fixation 1 à prévoir, le procédé comporte une réalisation STP1.1 d'au moins un premier trou 61 dans une ou plusieurs premières pièces 51 des pièces élémentaires 51,52. Ce ou ces premiers trous 61 sont par exemple percés avec une perceuse usuelle non représentée par commodité, poinçonnés, troués avec un laser... Chaque premier trou 61 a une forme cylindrique et présente un premier diamètre d'insertion D1.

Selon la figure 6 pour chaque fixation à prévoir le procédé comporte une réalisation STP1.2 d'au moins un deuxième trou 62 dans une ou plusieurs deuxièmes pièces 52 des pièces élémentaires 51, 52. Ce ou ces deuxièmes trous 62 sont par exemple percés avec une perceuse usuelle non représentée par commodité, poinçonnés, troués avec un laser... Chaque deuxième trou 62 présente une forme cylindrique ayant un deuxième diamètre d'insertion D2.

Les étapes STP1.1, STP1.2 sont réalisées séparément, éventuellement en même temps par deux opérateurs différents dans deux ateliers différents.

Par ailleurs, le deuxième diamètre d'insertion D2 est inférieur au premier diamètre d'insertion D1.

Selon la figure 7, le procédé peut alors comporter une étape de positionnement STP2 des pièces élémentaires 51,52 l'une par rapport à l'autre. Un même assemblage comporte au moins une première pièce 51 et au moins une deuxième pièce 52.

Cette étape de positionnement peut comprendre un collage STP2.1 avec un adhésif 60 des pièces élémentaires 51, 52 l'une à l'autre.

Cette étape de positionnement STP2 peut comprendre un déplacement d'au moins une des pièces élémentaires 51,52 pour mettre en concordance les trous d'une pièce élémentaire avec les tous correspondants des autres pièces élémentaires afin de former au moins un tunnel traversant de part en part l'assemblage.

En raison des différences entre les premier et deuxième diamètres d'insertion D1, D2, pour chaque fixation 1, le ou les deuxièmes trous 62 peuvent être désaxés d'une valeur M par rapport à l'axe de symétrie du ou des premiers trous 61. Cette valeur M peut être au maximum égale à une différence entre le premier diamètre d'insertion D1 et le deuxième diamètre d'insertion D2 divisée par 2 soit : M= (D1-D2)/2 avec « / » qui représente le signe de la division et « - » le signe de la soustraction.

La figure 8 illustre ce décalage vu de dessus.

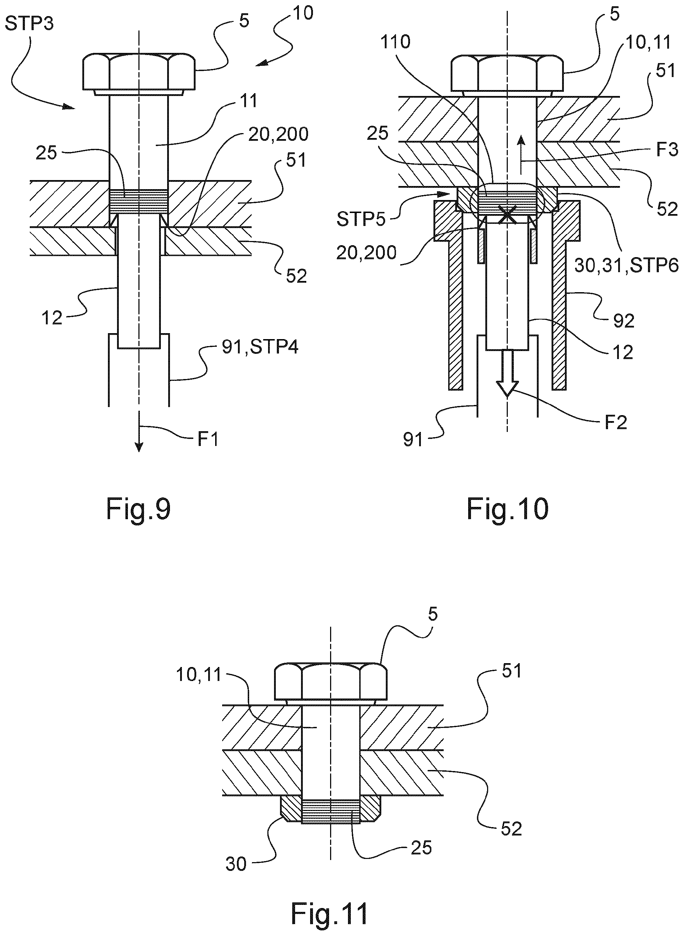

En référence à la figure 9, pour chaque fixation 1, le procédé comporte une étape d'introduction STP3 de son élément allongé 10 dans le ou les premiers trous 61 et dans le ou les deuxièmes trous 62. L'élément allongé 10 est poussé dans l'assemblage jusqu'à ce que l'organe coupant et le cas échéant son arête coupante 20 bute contre une deuxième pièce 52. L'axe géométrique AX de l'élément allongé est alors confondu avec l'axe de symétrie du ou des premiers trous, au jeu de montage éventuel près. Eventuellement, l'élément allongé 10 déforme élastiquement la ou les premières pièces lors de cette étape.

A l'issue cette étape STP3, les pièces élémentaires 51,52 sont de fait correctement positionnées l'une ou les unes par rapport à une ou aux autres. Eventuellement, l'élément allongé 10 est introduit directement après une étape de collage. Le poinçonnage décrit par la suite peut être réalisé, avant ou après durcissement de la matière adhésive.

L'organe coupant 200 est par ailleurs configuré pour découper au moins une dite pièce élémentaire suite à l'insertion du premier composant dans lesdites au moins deux pièces élémentaires.

Dès lors, pour chaque fixation 1, le procédé comporte une découpe STP4 de la ou des deuxièmes pièces 52 avec l'organe coupant et le cas échéant son arête coupante afin que le ou les deuxièmes trous 62 présentent le même diamètre que le ou les premiers trous 61 et puissent accueillir le tronçon initial 11. A cet effet, une pince 91 saisit le tronçon final 12 et exerce une première force de traction F1 sur ce tronçon final 12 selon l'axe géométrique AX.

A titre d'exemple, les pièces élémentaires 51,52 peuvent être réalisées avec un alliage connu sous la dénomination AL2024 T3. Un désaxage M de 0.3 millimètre peut en outre être suffisant pour bien positionner les pièces élémentaires 51,52. Avec un élément allongé 10 résistant à une force de traction de 1100 MPa (MégaPascal), la deuxième pièce 52 peut avoir une épaisseur de 1, 1.5, 2 ou 3 millimètres respectivement en présence de deuxième trous 62 d'un deuxième diamètre d'insertion D2 de 3.2, 4, 5 ou 6 millimètres.

En référence à la figure 10, le tronçon initial 11 comprend à l'issue de cette étape une partie 110 sortant du ou des deuxièmes trous 62. La matière découpée de la ou des deuxièmes pièces 52 est en outre expulsée par l'organe coupant 200 en dehors de l'assemblage.

Le procédé comporte alors l'agencement STP5 du deuxième composant 30 sur cette partie 110 d'extrémité du tronçon initial 11, puis une deuxième force de traction F2 est exercée sur le tronçon final 12 selon l'axe géométrique AX. La deuxième force de traction F2 est supérieure à la première force de traction F1 pour engendrer la séparation du tronçon final 12 et du tronçon initial 11, cette séparation étant illustrée par une croix sur la figure 10. Le tronçon fusible 13 peut le cas échéant être dimensionné à cet effet.

En présence d'une virole 31, une enclume 92 pousse selon la flèche F3 la virole 31, notamment dans un sens opposé au deuxième effort de traction F2. L'enclume 92 déforme la virole 31 pour la sertir sur le tronçon initial 11, et notamment dans sa ou ses rainures 26.

En présence d'un écrou 32, l'écrou 32 est vissé au tronçon initial 11, voire est maintenu dans une position vissée à l'aide d'un outil de vissage usuel.

La figure 11 illustre l'assemblage final ainsi obtenu. Les pièces élémentaires sont serrées entre elles, entre la tête 5 du premier composant 2 de la fixation 1 et le deuxième composant 30 de la fixation 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre des revendications.

## Revendications

1. Fixation (1) configurée pour assembler au moins deux pièces élémentaires (51, 52) en les serrant, ladite fixation (1) comportant un premier composant (2), le premier composant (2) étant muni d'une tête (5) prolongée par un élément allongé (10), ledit élément allongé (10) comprenant le long d'un axe géométrique (AX) un tronçon initial (11) et un tronçon final (12), le tronçon initial (11) s'étendant selon ledit axe géométrique (AX) à partir de la tête (5), le tronçon final (12) formant une extrémité libre (15) de l'élément allongé (10) et étant configuré pour être séparé du tronçon initial, le tronçon initial (11) étant contenu dans un premier cylindre géométrique (111) qui est centré sur ledit axe géométrique (AX) et d'un premier diamètre géométrique (D111) , le tronçon final (12) étant contenu dans un deuxième cylindre géométrique (112) qui est centré sur ledit axe géométrique (AX) et d'un deuxième diamètre géométrique (D112), le premier diamètre géométrique (D111) étant supérieur au deuxième diamètre géométrique (D112), **caractérisée en ce que** ledit élément allongé (10) comporte un organe coupant (200) positionné entre l'extrémité libre (15) et la tête (5) selon ledit axe géométrique (AX) et configuré pour découper au moins une dite pièce élémentaire suite à une insertion du premier composant dans lesdites au moins deux pièces élémentaires, ledit tronçon initial (11) s'étendant selon ledit axe géométrique (AX) de ladite tête (5) jusqu'à une extrémité initiale (14) portant ledit organe coupant (200).

2. Fixation selon la revendication 1,
**caractérisée en ce que** ledit organe coupant comporte une arête coupante (20).

3. Fixation selon la revendication 2,
**caractérisée en ce que** ladite arête coupante (20) a une forme circulaire (21) centrée sur l'axe géométrique (AX) et présentant ledit premier diamètre géométrique (D111).

4. Fixation selon l'une quelconque des revendications 1 à 3, **caractérisée en ce que** ledit élément allongé (10) comprend un tronçon fusible (13) interposé entre le tronçon initial (11) et le tronçon final (12).

5. Fixation selon les revendications 3 et 4,
**caractérisée en ce que** ladite arête coupante (20) entoure le tronçon fusible (13).

6. Fixation selon l'une quelconque des revendications 1 à 2, **caractérisée en ce que** ledit tronçon final (12) prolonge le tronçon initial (11).

7. Fixation selon les revendications 3 et 6,
**caractérisée en ce que** ladite arête coupante (20) entoure partiellement le tronçon final (12).

8. Fixation selon l'une quelconque des revendications 1 à 7, **caractérisée en ce que** ledit tronçon initial (11) comporte au moins une rainure (25) agencée entre la tête et l'organe coupant (200).

9. Fixation selon l'une quelconque des revendications 1 à 8, **caractérisée en ce que** ladite fixation (1) comporte un deuxième composant (30) indépendant de l'élément allongé (10), le deuxième composant (30) étant muni d'une virole (31) configurée pour être sertie au tronçon initial (11) ou d'un écrou (32) configuré pour être vissé au tronçon initial (11).

10. Procédé d'assemblage d'au moins deux pièces élémentaires (51, 52) avec une fixation (1) selon l'une quelconque des revendications 1 à 9
au cours duquel le procédé comporte pour ladite fixation :
- réalisation (STP1.1) d'au moins un premier trou (61) présentant un premier diamètre d'insertion (D1) respectivement dans une ou plusieurs premières pièces (51) des pièces élémentaires (51, 52), et
- réalisation (STP1.2) d'au moins un deuxième trou (62) présentant un deuxième diamètre d'insertion (D2) respectivement dans une ou plusieurs deuxièmes pièces (52) des pièces élémentaires (51, 52), le deuxième diamètre d'insertion (D2) étant inférieur au premier diamètre d'insertion (D1), et
- introduction (STP3) de l'élément allongé (10) dans le ou les premiers et deuxièmes trous (61, 62) en emmenant en butée ledit organe coupant (200) contre une deuxième pièce (52), et
- découpe (STP4) avec l'organe coupant de ladite une ou plusieurs deuxièmes pièces (52) par une première traction en exerçant une première force de traction (F1) sur ledit tronçon final, et
- agencement (STP5) d'une virole (31) sur une partie (110) du tronçon initial (11) située en dehors desdits pièces élémentaires (51, 52), deuxième traction en exerçant une deuxième force de traction (F2) sur le tronçon final (12) et déformation (STP6) de la virole jusqu'à une séparation du tronçon final (12) de ladite fixation (1), ladite deuxième force de traction étant supérieure à la première force de traction, ou
- agencement (STP5) d'un écrou (32) sur une partie (100) du tronçon initial (11) située en dehors desdits pièces élémentaires (51, 52), deuxième traction en exerçant une deuxième force de traction (F2) sur le tronçon final (12) et jusqu'à une séparation du tronçon final (12) de ladite fixation (1), ladite deuxième force de traction (F2) étant supérieure à la première force de traction (F1).

11. Procédé selon la revendication 10,
**caractérisé en ce que** le procédé comporte un positionnement (STP2) desdites pièces élémentaires (51,52) l'une par rapport à au moins une autre avant ladite introduction (STP3).

12. Procédé selon l'une quelconque des revendications 10 à 11, **caractérisé en ce que** le procédé comporte un collage (STP2.1) avec un adhésif (60) desdites pièces élémentaires (51, 52) l'une à l'autre lors dudit positionnement (STP2.1).

13. Procédé selon l'une quelconque des revendications 10 à 12, **caractérisé en ce que** lesdits perçages (STP1.1, STP1.2) sont réalisés séparément.

## Patentansprüche

1. Befestigungsmittel (1), das konfiguriert ist, um mindestens zwei elementare Teile (51, 52) durch Einklemmen zusammenzufügen, wobei das Befestigungsmittel (1) ein erstes Bauteil (2) umfasst, wobei das erste Bauteil (2) mit einem Kopf (5) versehen ist, der durch ein langgestrecktes Element (10) verlängert ist, wobei das langgestreckte Element (10) entlang einer geometrischen Achse (AX) einen Anfangsabschnitt (11) und einen Endabschnitt (12) umfasst, wobei sich der Anfangsabschnitt (11) ausgehend vom Kopf (5) entlang der geometrischen Achse (AX) erstreckt, und der Endabschnitt (12) ein freies Ende (15) des länglichen Elements (10) bildet und konfiguriert ist, um von dem Anfangsabschnitt getrennt zu werden, wobei der Anfangsabschnitt (11) in einem ersten geometrischen Zylinder (111) enthalten ist, der auf der geometrischen Achse (AX) zentriert ist und einen ersten geometrischen Durchmesser (D 111) hat, wobei der Endabschnitt (12) in einem zweiten geometrischen Zylinder (112) enthalten ist, der auf der geometrischen Achse (AX) zentriert ist und einen zweiten geometrischen Durchmesser (D112) hat, wobei der erste geometrische Durchmesser (D111) größer als der zweite geometrische Durchmesser (D112) ist, **dadurch gekennzeichnet, dass**
das langgestreckte Element (10) ein Schneidorgan (200) aufweist, das entlang der geometrischen Achse (AX) zwischen dem freien Ende (15) und dem Kopf (5) positioniert und konfiguriert ist, um mindestens ein besagtes elementares Teil infolge einer Einfügung der ersten Komponente in die mindestens zwei elementaren Teile zu schneiden, wobei sich der Anfangsabschnitt (11) entlang der geometrischen Achse (AX) von dem Kopf (5) bis zu einem Anfangsende (14) erstreckt, das das Schneidorgan (200) trägt.

2. Befestigungsmittel nach Anspruch 1,
**dadurch gekennzeichnet, dass** das Schneidorgan eine Schneidkante (20) umfasst.

3. Befestigungsmittel nach Anspruch 2,
**dadurch gekennzeichnet, dass** die Schneidkante (20) eine Kreisform (21) hat, die auf der geometrischen Achse (AX) zentriert ist und den ersten geometrischen Durchmesser (D111) aufweist.

4. Befestigungsmittel nach einem der Ansprüche 1 bis 3,
**dadurch gekennzeichnet, dass** das längliche Element (10) einen Sicherungsabschnitt (13) umfasst, der zwischen dem Anfangsabschnitt (11) und dem Endabschnitt (12) eingefügt ist.

5. Befestigungsmittel nach den Ansprüchen 3 und 4,
**dadurch gekennzeichnet, dass** die Schneidkante (20) den Sicherungsabschnitt (13) umgibt.

6. Befestigungsmittel nach einem der Ansprüche 1 bis 2,
**dadurch gekennzeichnet, dass** der Endabschnitt (12) den Anfangsabschnitt (11) verlängert.

7. Befestigungsmittel nach den Ansprüchen 3 und 6,
**dadurch gekennzeichnet, dass** die Schneidkante (20) den Endabschnitt (12) teilweise umgibt.

8. Befestigungsmittel nach einem der Ansprüche 1 bis 7,
**dadurch gekennzeichnet, dass** der Anfangsabschnitt (11) mindestens eine Nut (25) aufweist, die zwischen dem Kopf und dem Schneidorgan (200) angeordnet ist.

9. Befestigungsmittel nach einem der Ansprüche 1 bis 8,
**dadurch gekennzeichnet, dass** das Befestigungsmittel (1) eine zweite Komponente (30) umfasst, die unabhängig von dem langgestreckten Element (10) ist, wobei die zweite Komponente (30) versehen ist mit einer Zwinge (31), die konfiguriert ist, um auf den Anfangsabschnitt (11) aufgepresst zu werden, oder mit einer Mutter (32), die konfiguriert ist, um auf den Anfangsabschnitt (11) geschraubt zu werden.

10. Verfahren zum Zusammenfügen von mindestens zwei elementaren Teilen (51, 52) mit einem Befestigungsmittel (1) nach einem der Ansprüche 1 bis 9, wobei das Verfahren für das Befestigungsmittel umfasst:
- Herstellen (STP1.1) mindestens eines ersten Lochs (61) mit einem ersten Einführdurchmesser (D1) jeweils in einem oder mehreren ersten Teilen (51) der elementaren Teile (51, 52), und
- Herstellen (STP1.2) mindestens eines zweiten Lochs (62) mit einem zweiten Einführdurchmesser (D2) jeweils in einem oder mehreren zweiten Teilen (52) der elementaren Teile (51, 52), wobei der zweite Einführdurchmesser (D2) kleiner ist als der erste Einführdurchmesser (D1), und
- Einführen (STP3) des langgestreckten Elements (10) in das oder die ersten und zweiten Löcher (61, 62), wobei das Schneidorgan (200) an ein zweites Teil (52) anstößt, und
- Schneiden (STP4) der ein oder der mehreren zweiten Teile (52) mit dem Schneidorgan durch einen ersten Zug durch Ausüben einer ersten Zugkraft (F1) auf den Endabschnitt, und
- Anordnen (STP5) einer Zwinge (31) auf einem Teil (110) des Anfangsabschnitts (11), der außerhalb der elementaren Teile (51, 52) liegt, zweites Ziehen durch Ausüben einer zweiten Zugkraft (F2) auf den Endabschnitt (12) und Verformen (STP6) der Zwinge bis zu einer Trennung des Endabschnitts (12) von dem Befestigungsmittel (1), wobei die zweite Zugkraft größer als die erste Zugkraft ist, oder
- Anordnen (STP5) einer Mutter (32) auf einem Teil (100) des Anfangsabschnitts (11), der außerhalb der elementaren Teile (51, 52) liegt, zweites Ziehen durch Ausüben einer zweiten Zugkraft (F2) auf den Endabschnitt (12) und bis zu einer Trennung des Endabschnitts (12) von dem Befestigungsmittel (1), wobei die zweite Zugkraft (F2) größer als die erste Zugkraft (F1) ist.

11. Verfahren nach Anspruch 10,
**dadurch gekennzeichnet, dass** das Verfahren vor dem Einführen (STP3) ein Positionieren (STP2) der elementaren Teile (51, 52) relativ zu mindestens einem anderen umfasst.

12. Verfahren nach einem der Ansprüche 10 bis 11,
**dadurch gekennzeichnet, dass** das Verfahren ein Verkleben (STP2.1) der elementaren Teile (51, 52) aneinander mit einem Klebstoff (60) während des Positionierens (STP2.1) umfasst.

13. Verfahren nach einem der Ansprüche 10 bis 12,
**dadurch gekennzeichnet, dass** die Bohrungen (STP1.1, STP1.2) separat hergestellt werden.

## Claims

1. Attachment (1) configured for assembling at least two basic parts (51, 52) by tightening them, said attachment (1) including a first component (2), the first component (2) being equipped with a head (5) extended by an elongated element (10), said elongated element (10) comprising, along a geometric axis (AX), an initial section (11) and a final section (12), the initial section (11) extending along said geometric axis (AX) from the head (5), the final section (12) forming a free end (15) of the elongated element (10) and being configured to be separated from the initial section, the initial section (11) being contained in a first geometric cylinder (111), which is centred on said geometric axis (AX), and has a first geometric diameter (D111), the final section (12) being contained in a second geometric cylinder (112), which is centred on said geometric axis (AX), and has a second geometric diameter (D112), the first geometric axis (D111) being larger than the second geometric diameter (D112), **characterised in that** said elongated element (10) includes a cutting component (200), positioned between the free end (15) and the head (5) along said geometric axis (AX), and configured to cut at least one said basic part following insertion of the first component in said at least two basic parts, said initial section (11) extending along said geometric axis (AX) from said head (5) up to an initial end (14) supporting said cutting component (200).

2. Attachment according to claim 1, **characterised in that** said cutting component includes a cutting edge (20).

3. Attachment according to claim 2, **characterised in that** said cutting edge (20) has a circular shape (21) centred on the geometric axis (AX) and presenting said first geometric diameter (D111).

4. Attachment according to any one of claims 1 to 3, **characterised in that** said elongated element (10) comprises a frangible section (13) interposed between the initial section (11) and the final section (12).

5. Attachment according to claims 3 and 4, **characterised in that** said cutting edge (20) surrounds the frangible section (13).

6. Attachment according to either one of claims 1 or 2, **characterised in that** said final section (12) extends the initial section (11).

7. Attachment according to claims 3 and 6, **characterised in that** said cutting edge (20) partially surrounds the final section (12).

8. Attachment according to any one of claims 1 to 7, **characterised in that** said initial section (11) includes at least one groove (25) arranged between the head and the cutting component (200).

9. Attachment according to any one of claims 1 to 8, **characterised in that** said attachment (1) includes a second component (30) independent of the elongated element (10), the second component (30) being equipped with a ferrule (31) configured to be swaged to the initial section (11) or with a nut (32) configured to be screwed to the initial section (11).

10. Method for assembling at least two basic parts (51, 52) with an attachment (1) according to any one of claims 1 to 9, during which the method includes for said attachment:
- (STP1.1) making at least one first hole (61) presenting a first insertion diameter (D1) respectively in one or more first parts (51) of the basic parts (51, 52), and
- (STP1.2) making at least one second hole (62) presenting a second insertion diameter (D2) respectively in one or more second parts (52) of the basic parts (51, 52), the second insertion diameter (D2) being smaller than the first insertion diameter (D1), and
- (STP3) inserting the elongated element (10) in the first or the first and second holes (61, 62) by bringing said cutting component (200) to abut against a second part (52), and
- (STP4) cutting said one or more second parts (52) with the cutting component through first tension by exerting a first tension force (F1) on said final section, and
- (STP5) arranging a ferrule (31) on a part (110) of the initial section (11), part situated outside said basic parts (51, 52), second tension by exerting a second tension force (F2) on the final section (12) and (STP6) distorting the ferrule until the final section (12) separates from said attachment (1), said second tension force being greater than the first tension force, or
- (STP5) arranging a nut (32) on a part (100) of the initial section (11) situated outside said basic parts (51, 52), second tension by exerting a second tension force (F2) on the final section (12) and until the final section (12) separates from said attachment (1), said second tension force (F2) being greater than the first tension force (F1).

11. Method according to claim 10, **characterised in that** the method includes positioning (STP2) said basic parts (51, 52), one with respect to at least one other, before said insertion (STP3).

12. Method according to either claim 10 or 11, **characterised in that** the method includes bonding (STP2.1) said basic parts (51, 52) one to the other with an adhesive (60) during said positioning (STP2.1).

13. Method according to any one of claims 10 to 12, **characterised in that** said drilling steps (STP1.1, STP1.2) are performed separately.
